# EUROPEAN PATENT APPLICATION

(11) **EP 2 172 935 A1**
(43) Date of publication of application: **07.04.2010**
(21) Application number: 09012483.5
(22) Date of filing: 01.10.2009
(51) Int. Cl.: G11B 20/10, G11B 27/034, G11B 33/02, G11B 33/12

(54) **Optical disc drive**

(30) Priority: 06.10.2008 KR 20080097537
(71) Applicant: Hitachi-LG Data Storage Korea Inc., Geumcheon-gu Seoul 153-803 (KR)
(72) Inventor: Choi, Sun Pill, Geumcheon-gu Seoul 153-803 (KR)
(74) Representative: Katérle, Axel

(57) **Abstract**

Provided is an optical disc drive. The optical disc drive includes a memory card reader capable of wring/reading data on/from a memory card. At least one memory card slot for inserting at least one type of memory card may be set on the front side of the optical disc drive under a disc tray. Furthermore, the optical disc drive may include a memory card controller and an optical disc controller which are independent of each other or include a single controller. Accordingly, the optical disc drive can be simplified to efficiently use a space and improve user's convenience.

## Description

### BACKGROUND

### Field

The present invention relates to an optical disc drive.

### Discussion of the Related Art

An optical disc drive capable of reading data from an optical disc or recording data on the optical disc is connected to various types of hosts such as personal computers and used for the hosts.

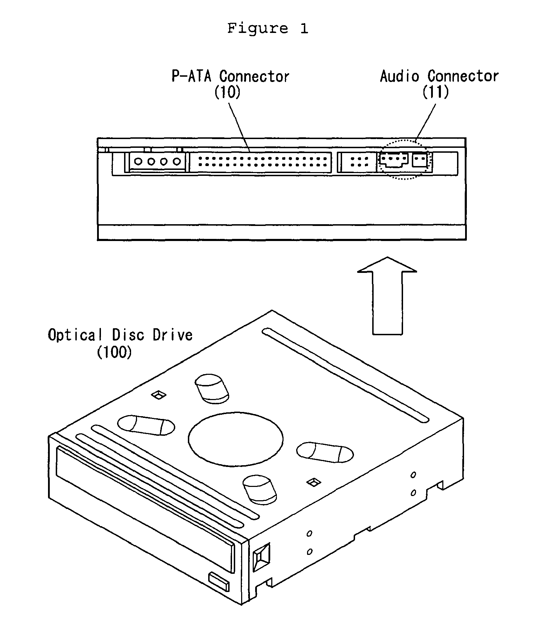

As illustrated in FIG. 1, a disc tray (exactly a tray cover) for inserting an optical disc into an optical disc drive 100 or ejecting the optical disc from the optical disc drive 100 is placed in the front of the optical disc drive 100.

And, a parallel advanced technology attachment (P-ATA) connector 10 and an audio connector 11 may be placed on the rear side of the optical disc drive 100. The P-APA may be replaced by a Serial ATA (S-ATA) connector.

The optical disc drive 100 is interfaced with a host and transmits/receives data to/from the host through the P-ATA connector 10 and the audio connector 11 may not be used.

Recently, memory cards having a variety of specifications and capacities ranging from 256MB to 16GB have been spread and widely used.

### SUMMARY

It is an object of the present invention to provide an apparatus capable of playing two types of storage media such as a memory card and an optical disc and recording data on the storage media.

According to an aspect of the present invention, there is provided an optical disc drive including a memory card reader capable of wring/reading data on/from a memory card, wherein at least one memory card slot for inserting at least one type of memory card is set on the front side of the optical disc drive.

The memory card slot may be placed under a disc tray and LEDs for indicating operating states of an optical disc and a memory card may be arranged on the front side of the optical disc drive.

The optical disc drive may include a memory card controller and an optical disc controller which are independent of each other. The rear side of the optical disc drive may include a USB connector connected to the memory card controller and a parallel ATA connector or a serial ATA connector connected to the optical disc controller.

The optical disc drive may include a single controller for controlling both a memory card and an optical disc. A serial ATA connector connected to the single connector may be placed on the rear side of the optical disc drive. The controller may back up data of the optical disc on the memory card or back up data of the memory card on the optical disc through a combination of buttons arranged on the rear side of the optical disc drive.

The optical disc drive may be a slim type optical disc drive. A single memory card slot may be placed at the side of the front of the slim type optical disc drive.

Accordingly, and apparatus can be simplified to efficiently use a space and improve user's convenience.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:

FIG. 1 illustrates a conventional optical disc drive;

FIG. 2 illustrates an optical disc drive according to a first embodiment of the present invention;

FIG. 3 illustrates an internal configuration of the optical disc drive according to the first embodiment of the present invention;

FIG. 4 illustrates an optical disc drive according to a second embodiment of the present invention;

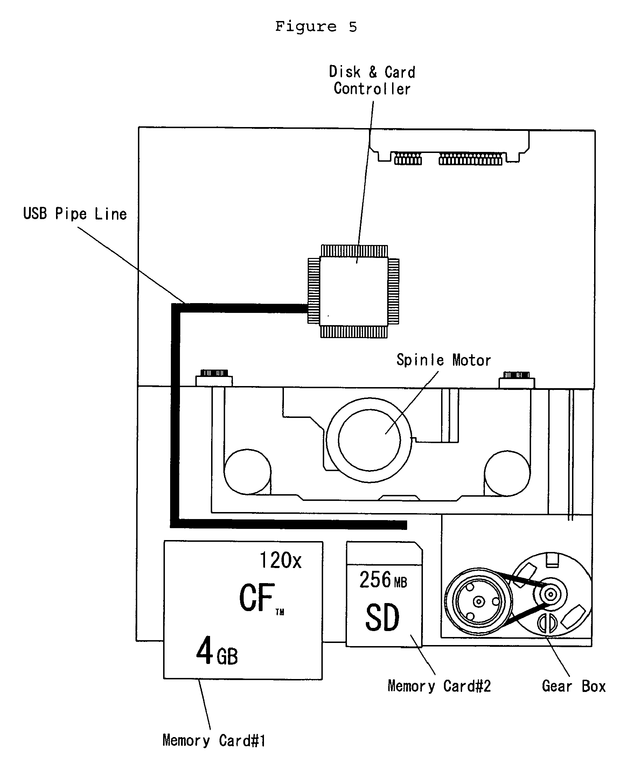

FIG. 5 illustrates an internal configuration of the optical disc drive according to another embodiment of the present invention; and

FIG. 6 illustrates a slim type optical disc drive according to an embodiment of the present invention.

### DETAILED DESCRIPTION OF THE PREFERRED EMBODIMENTS

An optical disc drive according to embodiments of the invention will be explained in detail with reference to the attached drawings.

The present invention can be applied to an optical disc drive used for various types of hosts such as personal computers and notebook computers. The optical disc may include a memory card reader capable of reading/writing data from/on at least one of various memory cards such as CF memory card, SD memory card, memory stick, etc. At least one slot of the memory card reader, that is, at least one memory card slot, may be placed on the front side of the optical disc drive under a disc tray.

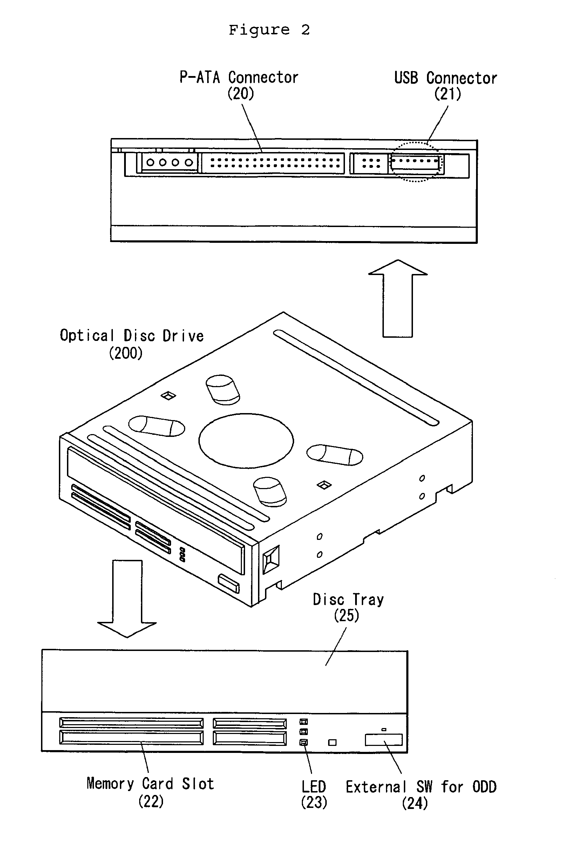

Referring to FIG. 2, for example, at least one memory card slot 22 for inserting various types of memory cards into an optical disc drive 200 to which the present invention is applied may be placed on the front side of the optical disc drive 200 under a disc tray.

Furthermore, a plurality of LEDs 23 for indicating an operating state of a memory card or an optical disc are arranged at the side of the memory card slot 22 and a switch 24 for inserting the disc tray into the optical disc drive 200 or ejecting the disc tray from the optical disc drive 200 may be placed at the side of the LEDs 23.

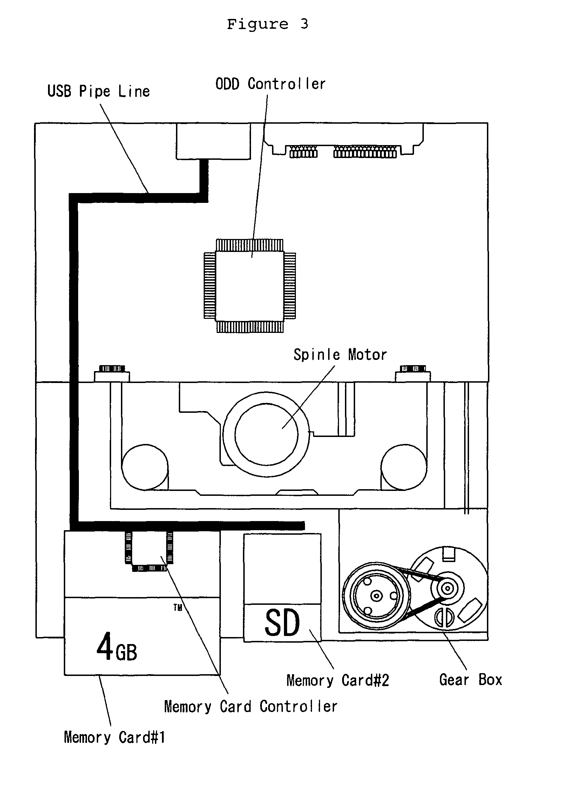

And, a P-ATA connector 20 and a USB connector 21 may be set on the rear side of the optical disc drive 200. For example, data read from an optical disc may be transmitted to a host such as a personal computer through the P-ATA connector 20 and data read from a memory card may be transmitted to a host such as a personal computer through the USB connector 21. Referring to FIG. 3, the optical disc drive 200 may include an optical disc controller and a memory card controller separately.

Data read from a memory card inserted into the memory card slot 22, for example, a 4GB CF memory card or a 256MB SD memory card as illustrated in FIG. 3, is transmitted to the USB connector through a USB pipe line.

The optical disc controller can perform an optical disc recording/reproducing operation for reproducing data of an optical disc loaded on the disc tray 25 or writing data on the optical disc and the memory card controller can carry out a memory card recording/reproducing operation for reading data from a memory card inserted into the memory card slot 22 or writing data on the memory card. In this embodiment, the optical disc recording/reproducing operation and the memory card recording/reproducing operation are individually performed.

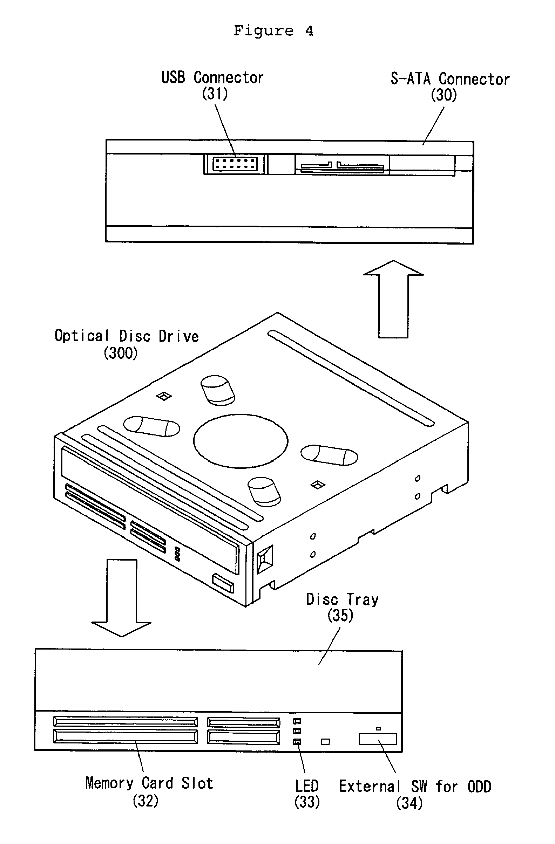

In an embodiment illustrated in FIG. 4, an S-ATA connector 30 instead of the P-ATA connector illustrated in FIG. 2 is placed on the rear side of the optical disc drive 300. In addition, a USB connector 31 may be set on the rear side of the optical disc drive. A disc tray 35, memory card slots 32, LEDs 33 and a switch 34 of Fig. 4 are same as those of Fig. 2. Data read from the optical disc may be transmitted to a host such as a personal computer through the S-ATA connector 30.

Meanwhile, the optical disc drive may include a single disc & card controller for controlling both an optical disc and a memory card to perform an optical disc recording/reproducing operation for reading data from an optical disc mounted on a disc tray 35 or recording data on the optical disc and carry out a memory card recording/reproducing operation for reading data from a memory card inserted into a memory card slot 32 or recording data on the memory card.

In this embodiment, the USB connector for connecting the memory card to the host may be omitted. Data read from the memory card may be transmitted to the host through the S-ATA connector 30 and data transmitted through the S-ATA may 30 be processed by the controller and recorded on the memory card.

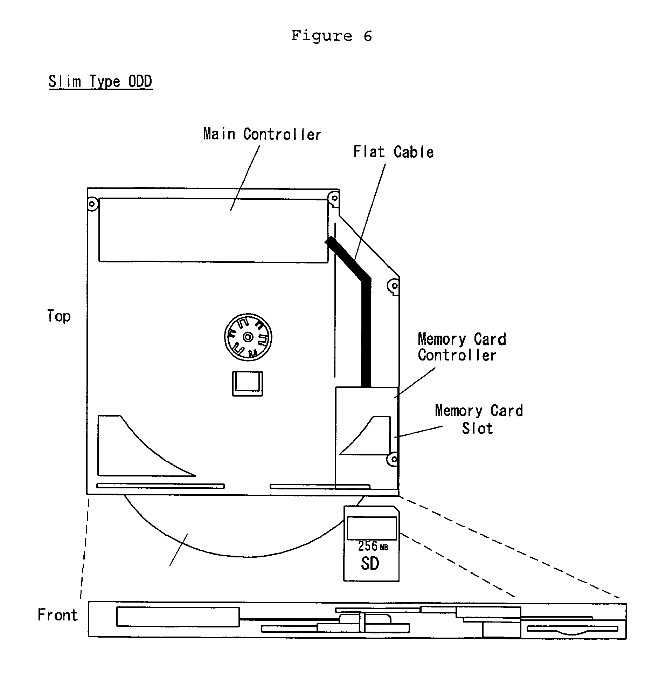

Referring to FIG. 6, the present invention can be applied to a slim type optical disc drive. A memory card slot may be placed at one side, for example, at the right side, of the front of the optical disc drive. Here, only a single type of memory card may be inserted into the memory card slot due to size restriction.

Furthermore, the optical disc drive to which the present invention is applied can perform a data recording and reproducing operation by using an optical disc and a memory card as devices associated with each other. For example, the memory card may be used as a buffer storage for an optical disc operation. Furthermore, the memory card may be used as a backup storage for backing up data recorded on the optical disc. On the contrary, the optical disc can back up data recorded on the memory card. This back-up operation can be performed through a combination of buttons arranged on the front side of the optical disc drive.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An optical disc drive comprising a memory card reader capable of wring/reading data on/from a memory card,
wherein at least one memory card slot for inserting at least one type of memory card is set on the front side of the optical disc drive.

2. The optical disc drive of claim 1, wherein the memory card slot is placed under a disc tray.

3. The optical disc drive of claim 1, wherein LEDs for indicating operating states of an optical disc and a memory card are arranged on the front side of the optical disc drive.

4. The optical disc drive of claim 1, wherein the optical disc drive comprises a memory card controller and an optical disc controller which are independent of each other.

5. The optical disc drive of claim 4, wherein the rear side of the optical disc drive includes a USB connector connected to the memory card controller and a parallel ATA connector or a serial ATA connector connected to the optical disc controller.

6. The optical disc drive of claim 1, the optical disc drive comprises a single controller for controlling both a memory card and an optical disc.

7. The optical disc drive of claim 6, wherein a serial ATA connector connected to the single connector is placed on the rear side of the optical disc drive.

8. The optical disc drive of claim 6, wherein the controller backs up data of the optical disc on the memory card or backs up data of the memory card on the optical disc through a combination of buttons arranged on the rear side of the optical disc drive.

9. The optical disc drive of claim 1, wherein the optical disc drive is a slim type optical disc drive.

10. The optical disc drive of claim 9, wherein a single memory card slot is placed at the side of the front of the slim type optical disc drive.
